# EUROPEAN PATENT APPLICATION

(11) **EP 1 361 470 A2**
(43) Date of publication of application: **12.11.2003**
(21) Application number: 03101209.9
(22) Date of filing: 01.05.2003
(51) Int. Cl.: G02B 26/10, G02B 26/08

(54) **Laser printing apparatus using a pivoting scanning mirror**

(30) Priority: 07.05.2002 US 378595 P; 10.03.2003 US 384861
(71) Applicant: Texas Instruments Incorporated, Dallas, Texas 75251 (US)
(72) Inventor: Turner, Arthur M., 75002, Allen (US); Dewa, Andrew S., 75093, Plano (US)
(74) Representative: Holt, Michael

(57) **Abstract**

A laser printer using a single surface resonant mirror for providing a bi-directional beam sweep. According to a first embodiment, a dual axis mirror (40) uses a first pair of torsional hinges (54A, 54B) to provide the resonant beam sweep and a second pair of torsional hinges (50A, 50B) provides movement orthogonal to the sweep to maintain successive images of the sweep parallel to each other. A second embodiment uses two single axis mirrors (98, 102). The first single axis mirror (102) provides the resonant beam sweep and the second (98) provides the orthogonal movement (100) to maintain parallel printed lines of image.

## Description

### FIELD OF THE INVENTION

The present invention relates generally to "laser printers" and more specifically to the use of MEMS (micro-electric mechanical systems) type mirrors (such as dual axis torsional hinge mirrors) to provide bi-directional raster type scanning across a moving photosensitive medium, such as a drum.

### BACKGROUND OF THE INVENTION

Rotating polygon scanning mirrors are typically used in laser printers to provide a "raster" scan of the image of a laser light source across a moving photosensitive medium, such as a rotating drum. Such a system requires that the rotation of the photosensitive drum and the rotating polygon mirror be synchronized so that the beam of light (laser beam) sweeps or scans across the rotating drum in one direction as a facet of the polygon mirror rotates past the laser beam. The next facet of the rotating polygon mirror generates a similar scan or sweep which also traverses the rotating photosensitive drum but provides an image line that is spaced or displaced from the previous image line. Since the movement of the rotating drum is substantially constant and does not stop as each sweep or scan line traverses from one side to the other, it will be appreciated that the sweep or scan can not be exactly at a right angle with the rotating drum or the lines of print would be at a slight angle on the finished printed page. Instead, the rotating polygon mirror is mounted at a slight angle so that the scanning light beam sweeps or scans at a slight angle with respect to the movement of the rotating drum. However, since the speed of the rotating polygon mirror and the rotating photosensitive medium or drum are synchronized, and since the slight angular movement of the sweep or scan advances the location of the beam image the same distance and in the same direction as the movement of the rotating photosensitive medium or drum, the resulting lines of print are substantially at right angles or orthogonal to the printed page.

Previous efforts to use a single and typically much less expensive flat mirror with a single reflective surface, such as a resonant mirror, to provide a scanning beam unfortunately require significant compromise in performance. For example, the scanning mirror generating the beam sweep or scan can be mounted at a slight angle in the same manner as a rotating polygon mirror, and the rotating photosensitive drum and the scanning mirror can be synchronized as the "resonant" mirror first pivots or rotates in one direction such that a first printed image line on the medium is at right angles or orthogonal with the movement of the photosensitive medium. Unfortunately, however, the return sweep will traverse a trajectory on the moving photosensitive drum which will be at an unacceptable angle with the first printed image line resulting from the previous sweep. Consequently, if such a single reflecting surface resonant mirror is to be used, it is necessary to interrupt the modulation of the reflected light beam and wait for the mirror to complete the return sweep or cycle, and then again start scanning in the original direction. This requirement of only using one of the sweep directions of the mirror, of course, reduces the print speed and requires expensive and sophisticated synchronization between the mirror and the rotating drum. Therefore, it would be desirable if there was a way to use an inexpensive resonant mirror that could be continuously and easily adjusted in a direction perpendicular to the scan such that the resonant sweep of the mirror in each direction generates images on a moving or rotating photosensitive drum that are always parallel.

Texas Instruments presently manufactures a two-axis analog mirror MEMS device fabricated out of a single piece of material (such as silicon, for example) typically having a thickness of about 100 - 115 microns. The layout consists of a mirror normally having a size of about 3.8 millimeters by 3.2 millimeters supported on a gimbal frame by two silicon torsional hinges. The mirror may be of any desired shape, although an oval shape is typically preferred. An elongated oval shaped mirror having a long axis of 4.3 millimeters and a short axis of 1.2 millimeters has been found to be especially suitable. The gimbal frame is attached to a support frame by another set of torsional hinges. The two orthogonal axis of this Texas Instruments manufactured mirror is particularly suitable for use with a laser printer. A similar single axis mirror device may be fabricated by eliminating the gimbal frame and hinging the mirror directly to the support structure. One example of a dual axis torsional hinged mirror is disclosed in U.S. Patent 6,295,154 entitled "Optical Switching Apparatus" and was assigned to the same assignee on the present invention.

### SUMMARY OF THE INVENTION

The problems mentioned above are addressed by the present invention which, according to one embodiment, provides a mirror apparatus suitable for use as the means of generating a sweeping or scanning beam of light across a rotating photosensitive drum in a laser printer. The mirror apparatus comprises a mirror device including a reflective surface portion positioned to intercept the beam of light from a light source. The reflective surface of the mirror device is supported by a first hinge arrangement, such as torsional hinges, for pivoting around a first axis and, according to one embodiment, is further supported by a second hinge arrangement for pivoting about a second axis substantially orthogonal to the first axis. Thus, pivoting of the mirror device about the first axis results in a beam of light reflected from the reflective surface moving along a first plane and pivoting of the device about the second axis results in the reflective light beam moving in a direction which is substantially orthogonal to the first plane. It may also be desirable that the second axis is set to compensate for the difference in angle that is needed to print straight lines on the paper for both scan directions. This is a very small angle, less than 1 degree. The mirror apparatus also includes first driver circuitry for alternately causing pivoting in one direction about the first axis and then the opposite direction to provide the beam sweep or scanning across a moving photosensitive medium. The moving photosensitive medium, such as a pivoting or rotating drum, is located to receive a modulated image of the reflected light beam as it sweeps a trace across the drum or moving medium between a first edge and a second edge in one direction across the medium as the mirror device pivots about the first axis. The photosensitive medium rotates or moves in a direction such that sequential images or traces are spaced from each other. There is also included a second drive for pivoting about the second axis such that traces are received on the photosensitive medium or drum substantially orthogonal to the movement of the photosensitive medium.

### BRIEF DESCRIPTION OF THE DRAWINGS

Other objects and advantages of the invention will become apparent upon reading the following detailed description and upon referencing the accompanying drawings in which:
FIGs. 1A, 1B, and 1C illustrate the use of a rotating polygon mirror for generating the sweep of a laser printer according to the prior art;
FIGs. 2A, 2B, 2C, and 2D illustrate a prior art example of using a single axis flat resonant mirror to generate a unidirectional beam sweep of a laser printer;
FIGs. 3A, 3B and 3C are perspective views of different embodiments of a two-axis torsional hinge mirror for generating the bi-directional beam sweep according to the teachings of embodiments of the present invention;
FIG. 3D illustrates how the beam traces provided by the mirror device of FIG. 3C moves across the photosensitive medium;
FIGs. 4A - 4F are cross-sectional views of FIG. 3A illustrating rotation or pivoting of the two sets of torsional hinges;
FIGs. 5A, 5B, and 5C illustrate the use of one two-axis resonant mirror such as is shown in FIGs. 3A and 3B to generate a bi-directional beam sweep of a laser printer according to teachings of the present invention;
FIG. 6 illustrates the pattern of the beam sweep of the apparatus of FIGs. 5A, 5B, and 5C and the resulting parallel beam images on a moving sensitive medium;
FIG. 7 is a perspective illustration of the use of two synchronized single axis mirrors of the type shown in FIGs. 3A, 3B and 3C to generate the bi-directional beam sweep of a laser printer according to the teachings of another embodiment of the present invention;
FIGs. 8A and 8B are embodiments of single axis analog torsional hinge mirrors; and
FIGs. 9A and 9B are perspective illustrations of the use of a single axis mirror to allow electronic realignment of the laser source and a polygon mirror.

### DESCRIPTION OF SPECIFIC EMBODIMENTS OF THE INVENTION

Like reference numbers in the figures are used herein to designate like elements throughout the various views of the present invention. The figures are not intended to be drawn to scale and in some instances, for illustrative purposes, the drawings may intentionally not be to scale. One of ordinary skill in the art will appreciate the many possible applications and variations of the present invention based on the following examples of possible embodiments of the present invention.

The present invention relates to laser printers using mirror apparatus with a moveable reflecting surface that has torsional hinges and is particularly suitable for use to provide the raster scans of a laser beam type printer by using either a single two-axis resonant mirror according to one embodiment, or using one single axis resonant mirror in combination with another mirror device such as a polygon mirror or a second single axis mirror for providing parallel lines of print by continuously adjusting the vertical movement of the beam with respect to the movement of the photosensitive medium.

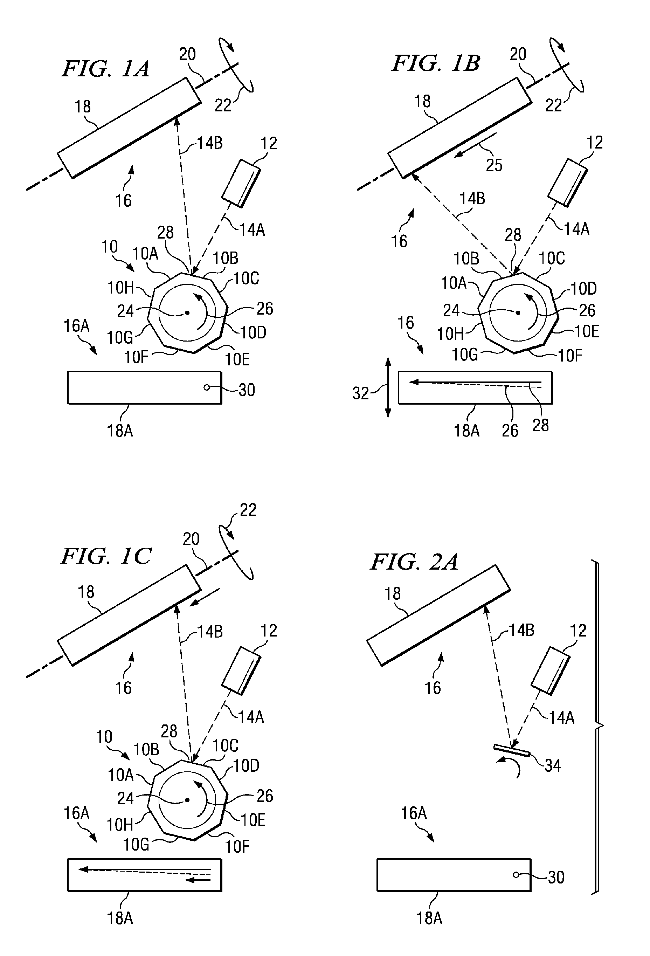

Referring now to FIGs. 1A, 1B and 1C, there is shown an illustration of the operation of a prior art laser printer using a rotating polygon mirror. As shown in FIG. 1A, there is a rotating polygon mirror 10 which in the illustration has eight reflective surfaces 10A - 10H. A light source 12 produces a beam of light, such as a laser beam, that is focused on the rotating polygon mirror so that the beam of light from the light source 12 is intercepted by the facets 10A - 10H of rotating polygon mirror 10. Thus the laser beam of light 14A from the light source 12 is reflected from the facets 10A - 10H of the polygon mirror 10 as illustrated by dashed line 14B to a moving photosensitive medium 16 such as a rotating photosensitive drum 18 having an axis of rotation 20. The moving photosensitive medium 16 or drum 18 rotates around axis 20 in a direction as indicated by the arcurate arrow 22 such that the area of the moving photosensitive medium 16 or drum 18 exposed to the light beam 14B is continuously changing. As shown in FIG. 1A, the polygon mirror 10 is also rotating about an axis 24 (axis is perpendicular to the drawing in this view) as indicated by the second arcurate arrow 26. Thus, it can be seen that the leading edge 28 of facet 10B of rotating polygon mirror 10 will be the first part of facet 10B to intercept the laser beam of light 14A from the light source 12. As the mirror 10 rotates, each of the eight facets of mirror 10 will intercept the light beam 14A in turn. As will be appreciated by those skilled in the art, the optics to focus the light beam, the lens system to flatten the focal plane to the photosensitive drum, and any fold mirrors to change the direction of the scanned beam are omitted for ease of understanding.

Illustrated below the rotating polygon mirror 10 is a second view 16A, 18A of the photosensitive medium 16 or drum 18 as seen from the polygon scanner. As shown by reference number 30 on the photosensitive drum view 18B, there is the beginning point of an image of the laser beam 14B on medium 16 immediately after the facet 10B intercepts the light beam 14A and reflects it to the moving photosensitive medium 16 or drum 18.

Referring now to FIG. 1B, there is shown substantially the same arrangement as illustrated in FIG. 1A except the rotating polygon mirror 10 has continued its rotation about axis 24 such that the facet 10B has rotated so that its interception of the laser beam 10A is about to end. As will also be appreciated by those skilled in the art, because of the varying angle the mirror facets present to the intercepted light beam 14A, the reflected light beam 14B will move across the surface of the rotating drum as shown at 25 and 26 in FIGs. 1A and 1B respectively.

However, it will also be appreciated that since rotating drum 18 was moving orthogonally with respect to the scanning movement of the light beam 14B, that if the axis of rotation 24 of the rotating mirror was exactly orthogonal to the axis 20 of the rotating photosensitive drum 18, an image of the sweeping or scanning light beam on the photosensitive drum would be recorded at a slight angle. As shown more clearly by view 18A of the photosensitive drum, dashed line 26 illustrates that the trajectory of the light beam 14B is itself at a slight angle, whereas the solid line 28 representing the resulting image on the photosensitive drum is not angled but orthogonal to the rotation or movement of the photosensitive medium. To accomplish this parallel printed line image 28, the rotating axis 24 of the polygon mirror 10 is typically mounted at a slight tilt with respect to the rotating photosensitive drum 18 so that the amount of vertical travel or distance traveled by the light beam along vertical axis 32 during a sweep or scan across medium 16 is equal to the amount of movement or rotation of the photosensitive medium 16 or drum 18. Alternately, this tilt can also be accomplished using a fold mirror that is tilted.

FIG. 1C illustrates that facet 10B of rotating polygon mirror 10 has rotated away from the light beam 14A, and facet 10C has just intercepted the light beam. Thus, the process is repeated for a second image line. Continuous rotation will of course result in each facet of rotating mirror 10 intercepting light beam 14 so as to produce a series of parallel and spaced image lines which when viewed together will form a line of print or other image.

As will be appreciated, this arrangement will maintain parallel printed line images so long as the slight tilt of the rotating polygon mirror 10 is not altered by outside factors such as shock, temperature, or other causes. Unfortunately, other outside causes do often cause misalignment of the polygon mirror and the photosensitive drum such that difficult mechanical realignment is required for quality printing.

It would therefore be valuable if dynamic alignment of a polygon mirror 10 and a photosensitive drum 18 could be accomplished. Unfortunately, until the present invention, such dynamic mechanical realignment of the large components, such as the polygon mirror, required unacceptably expensive alignment components. Therefore, typical polygon scanning mirror laser printers do not include any type of means or devices for dynamic alignment of the rotating mirror and the photosensitive drum. It is further appreciated by those skilled in the laser printing art, that the rotating mirror is a very precise part or component of the laser printer which must spin at terrific speeds and without undue wear of the bearings if its print quality is to be maintained. Therefore, it would also be desirable if a less complex flat mirror, such as for example a resonant flat mirror, could be used to replace the complex and heavy polygon scanning mirror.

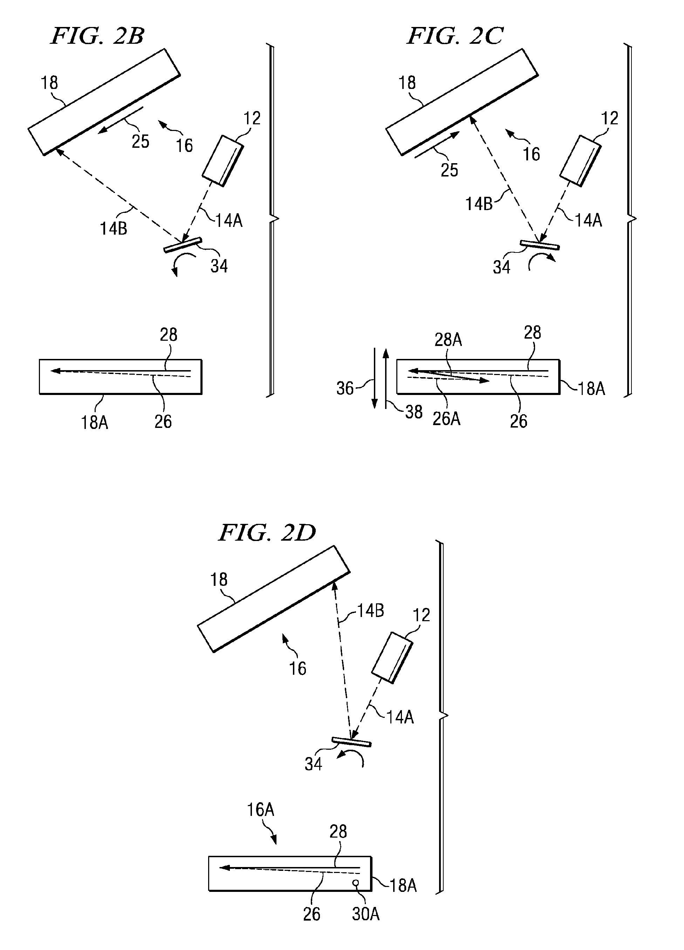

Referring now to FIGs. 2A, 2B, 2C and 2D, there is illustrated a prior art example of a laser printer using a single axis oscillating mirror to generate the beam sweep. As will be appreciated by those skilled in the art and as illustrated in the following FIGs., although the oscillating mirror is perfectly capable of generating a bi-directional beam sweep, because of the moving photosensitive medium 16 or drum 18 and as discussed above, prior art efforts have typically been limited to using only one direction of the oscillating beam sweep. As shown in FIGs. 2A, 2B, 2C and 2D, the arrangement is substantially the same as shown in FIGs. 1A, 1B and 1C except that the rotating polygon mirror has been replaced with a single oscillating flat mirror 34. As was the case with respect to FIG. 1A, FIG. 2A illustrates the beginning of a beam sweep by the single axis mirror 34. Likewise, FIG. 2B illustrates the beam sweep as mirror 34 substantially completes its scan and, as illustrated at the photosensitive drum view 18A, the mirror 34 is mounted at a slight angle such that the beam sweep is synchronized with the movement of the rotating drum 18 so that the distance the medium moves is equal to the vertical distance the light beam moves during a sweep. As was the case in FIG. 1B, the slightly angled trajectory as illustrated by reference number 36 results in a horizontal image line 28 on the moving photosensitive medium 16 or drum 18B.

Thus, up to this point, it would appear that the flat surface single torsional axis oscillating mirror 34 should work as well as the rotating polygon mirror 30 as discussed with respect to FIGs. 1A, 1B, and 1C. However, when the oscillating mirror starts pivoting back in the opposite direction as shown by reference number 25A in FIG. 2C, the beam 14A must be turned off and not used for printing since the vertical movement of the mirror resulting from being mounted at a slight angle and movement of the moving photosensitive medium 16 or rotating drum 18 will now be cumulative rather than subtractive. Consequently, the angled trajectory 26 of the beam and movement of the medium would result in a printed image line 28A which is at even a greater angle than what would occur simply due to the movement of the rotating photosensitive drum 18. This is, of course, caused by the fact that as the beam sweep returns, it will be moving in a downward direction rather than an upward direction as indicated by arrow 36, whereas the photosensitive drum movement is in the upward direction indicated by arrow 38. Thus, as stated above, the movement of the drum and the beam trajectory are cumulative. Therefore, for satisfactory printing, it will be appreciated that the light beam and the printing must be interrupted and/or stopped during the return trajectory of the scan. Thus, the oscillating mirror 34 must complete its reverse scan and then start its forward scan again as indicated at 30A, at which time the modulated laser is turned on and a second image line is printed. Thus, it will be appreciated that although the oscillating flat mirror 34 may be somewhat less expensive than the rotating polygon mirror and is also much lighter in weight, it is typically less efficient in terms of duty cycle than polygon mirror printers since printing can only take place in one scan direction. Thus, it would be desirable if there was a way for continually adjusting the position of the scan of a resonant mirror in a direction orthogonal to the sweep of the laser beam.

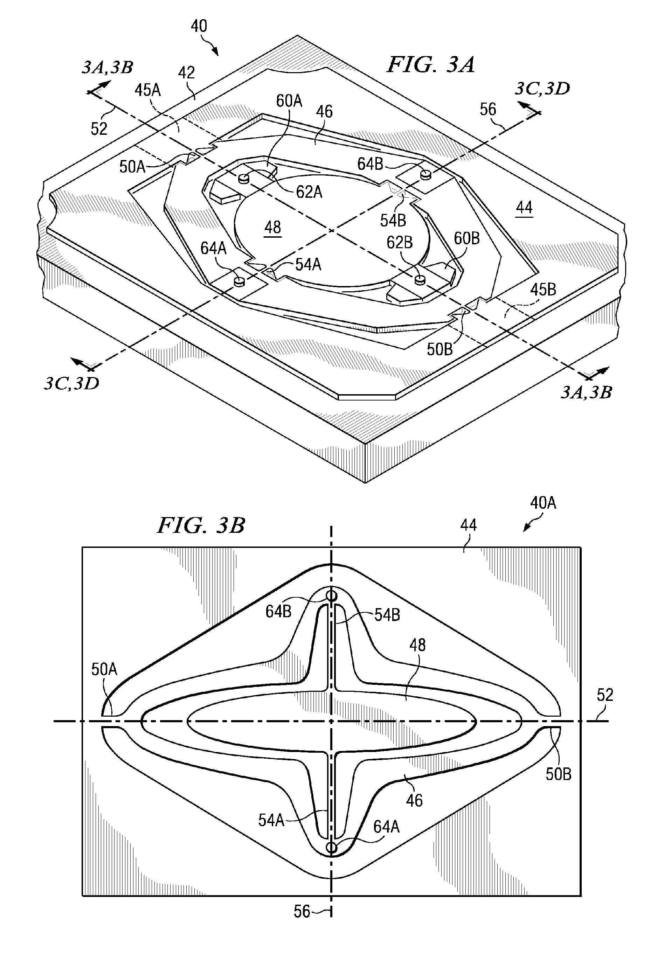

Referring now to FIG. 3A, there is shown a perspective view of a two-axis bi-directional mirror assembly 40 which could be used to provide a bi-directional beam sweep across a photosensitive medium wherein the beam sweep is also adjusted in a direction orthogonal to the oscillations of the mirror to maintain parallel printed image lines produced by a beam sweep in one direction and then in a reverse direction. As shown, moveable mirror assembly 40 is illustrated as being mounted on a support structure 42, and as being driven along both axis by electromagnetic forces. The moveable mirror assembly 40 may be formed from a single piece of substantially planar material and the functional or moving parts may be etched in the planar sheet of material (such as silicon) by techniques similar to those used in semiconductor art. As discussed below, the functional components include a support portion such as, for example, the frame portion 44, an intermediate gimbals portion 46 and an inner mirror portion 48. It will be appreciated that the intermediate gimbals portion 46 is hinged to the frame portion 44 at two ends by a first pair of torsional hinges 50A and 50B spaced apart and aligned along a first axis 52. Except for the first pair of hinges 50A and 50B, the intermediate gimbals portion 46 is separated from the frame portion 44. It should also be appreciated that, although frame portion 44 provides an excellent support for moving the device to support structure 42, it may be desirable to eliminate the frame portion 44 and simply extend the torsional hinges 50A and 50B and anchor the hinges directly to support structure 42 as indicated by anchors 45A and 45B shown in dotted lines on FIG. 3A.

The inner, centrally disposed mirror portion 48 having a reflective surface centrally located thereon is attached to gimbals portion 46 at hinges 54A and 54B along a second axis 56 that is orthogonal to or rotated 90° from the first axis. The reflective surface on mirror portion 48 is on the order of 110-400 microns in thickness, depending on the operating frequency, and is suitably polished on its upper surface to provide a specular or mirror surface. The thickness of the mirror is determined by the requirement that the mirror remain flat during scanning. Since the dynamic deformation of the mirror is proportional to the square of the operating frequency and proportional to the operating angle, higher frequency, larger angle mirrors require still stiffer mirrors, thus thicker mirrors. In order to provide necessary flatness, the mirror is formed with a radius of curvature greater than approximately 15 meters, depending on the wavelength of light used to expose the photosensitive drum. The radius of curvature can be controlled by known stress control techniques such as by polishing on both opposite faces and deposition techniques for stress controlled thin films. If desired, a coating of suitable material can be placed on the mirror portion to enhance its reflectivity for specific radiation wavelengths.

Referring now to FIG. 3B, there is a top view illustration of a long oval shaped dual axis mirror apparatus 40 suitable for use to provide resonant oscillations for generating the repetitive beam sweep. An example of such a long oval shaped mirror portion 48 found to be satisfactory has a long axis of about 4.3 millimeters and a short axis of about 1.2 millimeters. Except for the drive circuitry that creates the resonant oscillations which provide the repetitive beam sweep, the functional parts of this embodiment are the same as that discussed with respect to FIG. 3A and, therefore, carry the same reference numbers. Because of the advantageous material properties of single crystalline silicon, MEMS based mirror such as FIG. 3B, have a very sharp torsional resonance. The Q of the torsional resonance typically is in the range of 100 to over 1000. This sharp resonance results in a large mechanical amplification of the mirror's motion at a resonance frequency versus a low frequency. Therefore, according to one embodiment of this invention, it may be advantageous to pivot a mirror about the scanning axis at the resonant frequency. This reduces the needed drive power dramatically.

It should be obvious to one skilled in the art that there are many combinations of drive mechanisms for the scan axis and for the substantially orthogonal or cross scan axis. The mirror mechanical motion in the scan axis is typically greater than 15 degrees and may be as great as 30 degrees, whereas movement about the cross scan axis may be less than 1 degree. Since pivoting about the scan axis must move through a large angle and the mirror is long in that direction, electromagnetic or inertial drive methods for producing movement about the scan axis have been found to be effective. Inertial drive involves applying a small rotational motion at or near the resonant frequency of the mirror to the whole silicon structure which then excites the mirror to resonantly pivot or oscillate about its torsional axis. In this type of drive a very small motion of the whole silicon structure can excite a very large rotational motion of the mirror. For the cross scan or orthogonal axis, since a very small angular motion is required, electromagnetic force similar to that used in FIG. 3A may be used to produce the more controlled movement about the torsional hinges 50A and 50B to orthogonally move the beam sweep to a precise position. Consequently, a set of permanent magnet sets are only associated with the movement about hinges 50A and 50B. Further, although an oval-shaped mirror has been found to be particularly suitable, it will be appreciated that the mirror could have other shapes such as for example, round, square, rectangular, or some other shape.

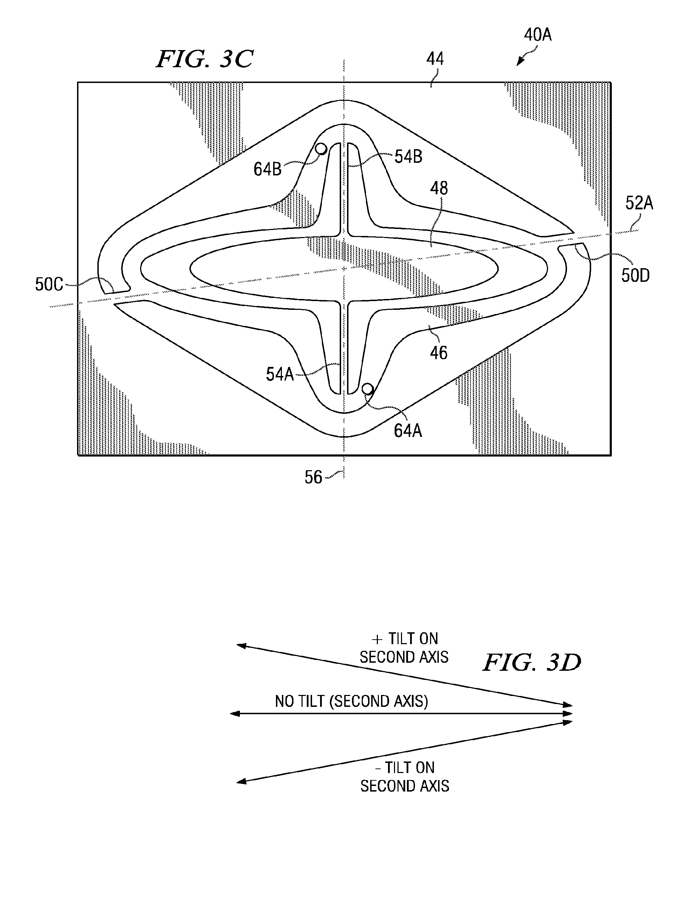

Referring now to FIG. 3C, there is shown an illustration of an oval shaped mirror device similar to that shown in FIG. 3B, except that the second set of hinges 50C and 50D are offset slightly from being orthogonal to the resonant hinges 54A and 54B. Thus, a rotation around hinges 50C and 50D results in movement that is not quite orthogonal to axis 56. This is illustrated by axis 52A.

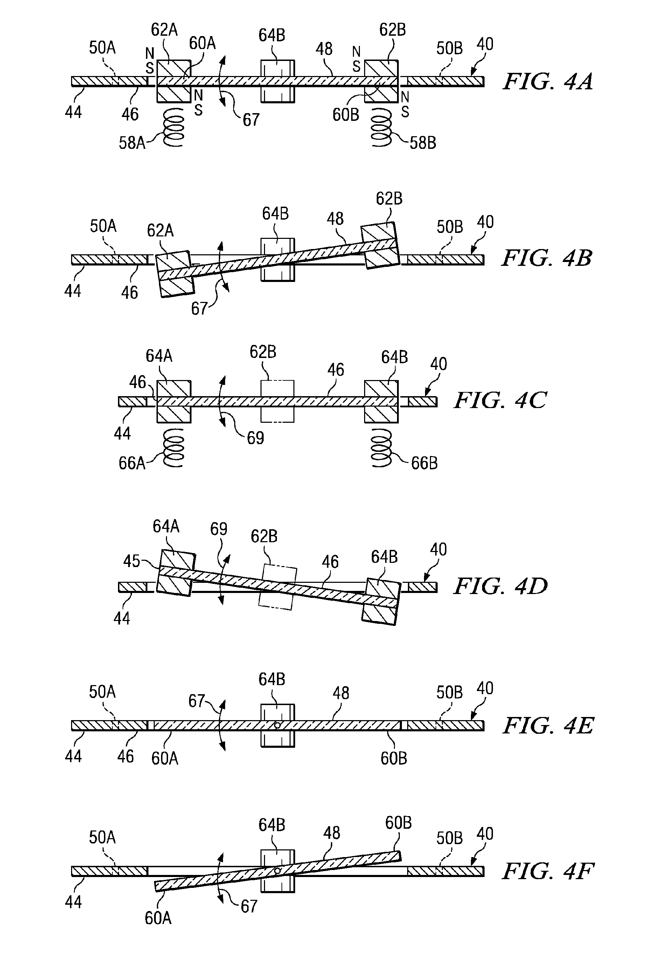

Referring to FIGs. 4A and 4B along with FIG. 3A, mirror assembly 40 may typically include a pair of serially connected electrical coils 58A and 58B under tabs 60A and 60B respectively to provide an electromagnetic drive for the beam sweep. Thus by energizing the coils with alternating positive and negative voltage at a selected frequency, the mirror portion 48 can be made to oscillate at that frequency. As mentioned above, to facilitate the electromagnetic drive, mirror assembly 40 may also include a first pair of permanent magnets 62A and 62B mounted on tabs 60A and 60B of mirror portion 48 along the first axis 52. Permanent magnet sets 62A and 62B symmetrically distribute mass about the axis of rotation 56 to thereby minimize oscillation under shock and vibration, each permanent magnet 62A, 62B preferably comprises an upper magnet set mounted on the top surface of the mirror assembly 40 using conventional attachment techniques such as adhesive or indium bonding and an aligned lower magnet similarly attached to the lower surface of the mirror assembly 40 as shown in FIGs. 4A and 4B. The magnets of each set are arranged serially such as the north/south pole arrangement indicated in FIG. 4A. There are several possible arrangements of the four sets of magnets which may be used, such as all like poles up; or two sets of like poles up, two sets of like poles down; or three sets of like poles up, one set of like poles down, depending upon magnetic characteristics desired.

Referring now to FIGs. 4C and 4D along with FIG. 3A, gimbals portion 46 is mounted to frame portion 44 by means of hinges 50A and 52B. Motion of the gimbals portion 46 about the first axis 52 as illustrated in FIG. 3A is provided by another pair of serially connected coils 66A and 66B. As has been mentioned, pivoting about axis 52 will provide the vertical motion necessary to maintain consecutive printed image lines parallel to each other, and is facilitated by permanent magnet sets 64A and 64B.

The middle or neutral position of mirror assembly 40 of FIG. 3A is shown in FIG. 4A, which is a section taken through the assembly along line 3A-3A (or axis 52) of FIG. 3A. Rotation of mirror portion 48 about axis 56 independent of gimbals portion 46 and/or frame portion 44 is shown in FIG. 4B as indicated by arrow 67. FIG. 4C shows the middle position of the mirror assembly 40, similar to that shown in FIG. 4A, but taken along line 3C-3C (or axis 56) of FIG. 3A. Rotation of the gimbals portion 46 (which supports mirror portion 48) about axis 52 independent of frame portion 44 is shown in FIG. 4D as indicated by arrow 69. The above arrangement allows independent rotation of mirror portion 48 about the two axes which in turn provides the ability to direct the oscillating beam onto the moving photosensitive medium 16 or drum 18 and still produce parallel image lines.

As mentioned above, other drive circuits for causing pivoting of the mirror device around torsional hinges 54A and 54B may be employed. These drive sources include piezoelectric drives and electrostatic drive circuits. Piezoelectric and electrostatic drive circuits have been found to be especially suitable for generating the resonant oscillation for producing the back and forth beam sweep. Therefore, referring now to FIGs. 4E and 4F, resonant oscillation as provided by mirror apparatus 40A of FIG. 3B is illustrated. As shown in FIG. 4E and FIG. 4F, resonant oscillations of mirror 48 about torsional axes 54A and 54B is the same as the electromagnetic oscillations discussed with respect to FIGs. 3A, 4A and 4B except, of course, that coils 58A and 58B along with permanent magnet sets 62A and 62B are not necessary.

The electromagnetic driven orthogonal movement of the dual axis mirror of FIG. 3B is the same as the orthogonal movement of dual axis mirror of FIG. 3A as discussed above with respect to FIGs. 4C and 4D, except the permanent magnet sets 62A and 62B shown in dotted lines would not be present.

Further, by carefully controlling the dimension of hinges 54A and 54B (i.e., width, length and thickness) the mirror may be manufactured to have a natural resonant frequency which is substantially the same as the desired oscillating frequency of the mirror. Thus, by providing a mirror with a resonant frequency substantially equal to the desired oscillating frequency, the power loading may be reduced.

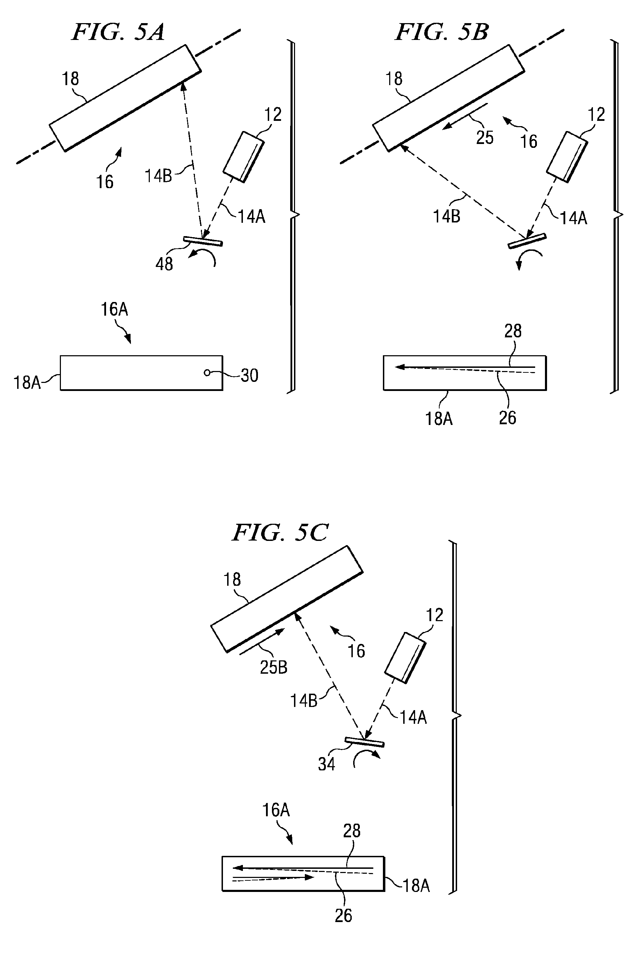

FIGs. 5A, 5B and 5C illustrate the use of a dual axis scanning resonant mirror such as shown in FIGS. 3A or 3B according to one embodiment of the present invention. As can be seen from FIGs. 5A and 5B, the operation of dual orthogonal scanning mirror assembly 40 as it scans from right to left in the FIGs. is substantially the same as mirror 34 pivoting around a single axis as discussed and shown in FIGs. 2A and 2B. However, unlike the single axis mirror 34 and as shown in FIG. 5C, it is not necessary to turn off the laser (light beam 14B) on the return scan, since a return or left to right scan in the FIGs. 5A, 5B and 5C can be continuously modulated during the return scan so as to produce a printed line of images on the moving photosensitive medium 16. The second printed line of images, according to the present invention, will be parallel to the previous right to left scan. This is, of course, accomplished by slight pivoting of the mirror 48 around axis 52 of the dual axis mirror as was discussed above.

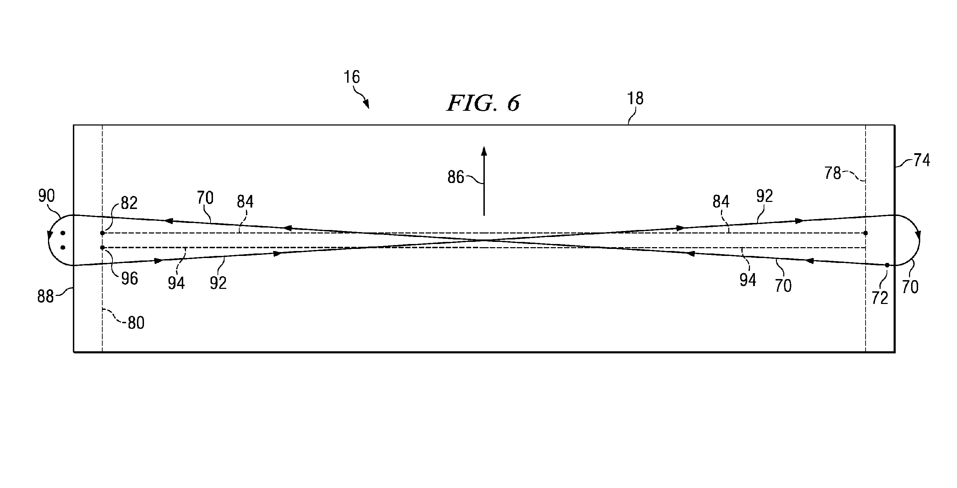

Referring now to FIG. 6, there is shown an exaggerated schematic of the laser beam trajectory responsive to mirror movement about two axes during one complete resonant cycle. The beam trajectory illustrated in FIG. 6 is shown with a portion of a moving photosensitive medium 16 such as a rotating drum 18 to illustrate how the beam trajectory generates two parallel image lines during the right to left scan and the left to right return scan of a single oscillation. In the example shown in FIG. 6, a right to left movement portion of the beam trajectory is identified by the reference number 70. It should be understood that the term "beam trajectory" as used herein does not necessarily mean that the laser light is on or actually providing light. The term is used herein to illustrate the path that would be traced if the light was actually on and a beam of light emitted. As will be appreciated by those skilled in the art, the laser light is typically turned on and off continuously due to modulation and is also typically switched off at the two ends (left and right) of a scan or sweep. However, the modulation pattern can vary from full on for the complete scan or sweep to full off for the complete scan. Modulation of the scanning beam, and switching off at the end portion of a scan is also, of course, true for all types of laser printers including laser printers which use a rotating polygon mirror. Therefore, in the embodiment shown in FIG. 6, the laser beam is capable of providing modulated light at point 72 which is next to edge 74 of medium 16. However, as will be recognized, a printed page usually includes left and right margins. Therefore, although a printed image line could begin at point 72 on a right to left scan of the beam trajectory as shown by trajectory portion 70, the modulated light beam does not actually start to produce an image until point 76 or margin 78 of the right to left portion of the trajectory and stops printing at the left margin 80. This is also indicated at the rightmost dot 82 on the printed image line 84. It will also be understood that the photosensitive medium 16 is moving in a direction as indicated by arrow 86. Therefore, to generate printed image line 84 between margins 78 and 80 as a horizontal line, the right to left beam trajectory is controlled by mirror assembly 40 pivoting on torsional hinges 50A and 50B about axis 52 an appropriate amount so that the resulting line between the beginning right end point 72 and the left ending point 82 is horizontal. That is, the beam trajectory is moved up during a beam sweep by substantially the same amount or distance as the photosensitive medium 16 moves up during the right to left beam sweep. After the right to left portion of the beam trajectory is complete at the left edge 88 of medium 16 (i.e., half of the resonant or oscillating cycle), the mirror is rapidly pivoted about torsional hinges 50A and 50B in the opposite direction as the resonant mirror changes the direction of its sweep as indicated by portion 90 of the beam trajectory. Then, when the left to right portion 92 of the trajectory beam sweep (resulting from pivoting about axis 56 on torsional hinges 54A and 54B) again reaches the left edge 80 of medium 16, the mirror is again slowly pivoted about torsional hinges 50A and 50B to shift the left to right portion 92 of the beam trajectory upward as it traverses across medium 16 in a manner similar to the right to left portion of the trajectory. Thus, the generated image line 94 starting at beginning point 96 and generated during the left to right scan is maintained parallel to the previous generated image line 84. Then as the beam trajectory passes the right edge 78 of the medium 16, the resonant scan mirror again begins to reverse its direction by pivoting in the opposite direction about torsional hinges 50A and 50B so as to return to the starting point 72. The cycle is then of course repeated for another complete resonant sweep such that two more image lines are produced.

If the mirror device of FIG. 3C is used, pivoting about the non-orthogonal axis 52 will produce a trace pattern somewhat similar to that of FIG. 6, except that the traces will not cross at the center. This is illustrated in FIG. 3D.

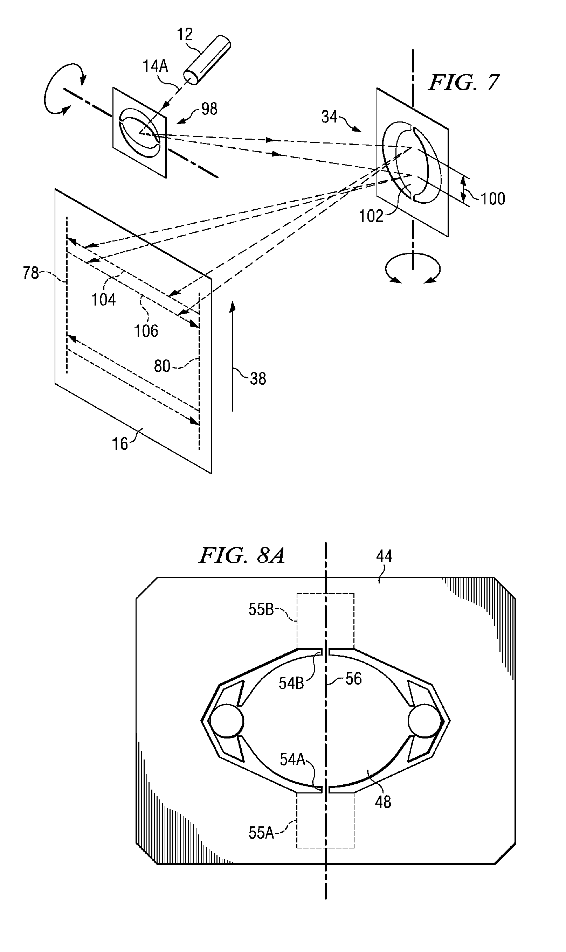

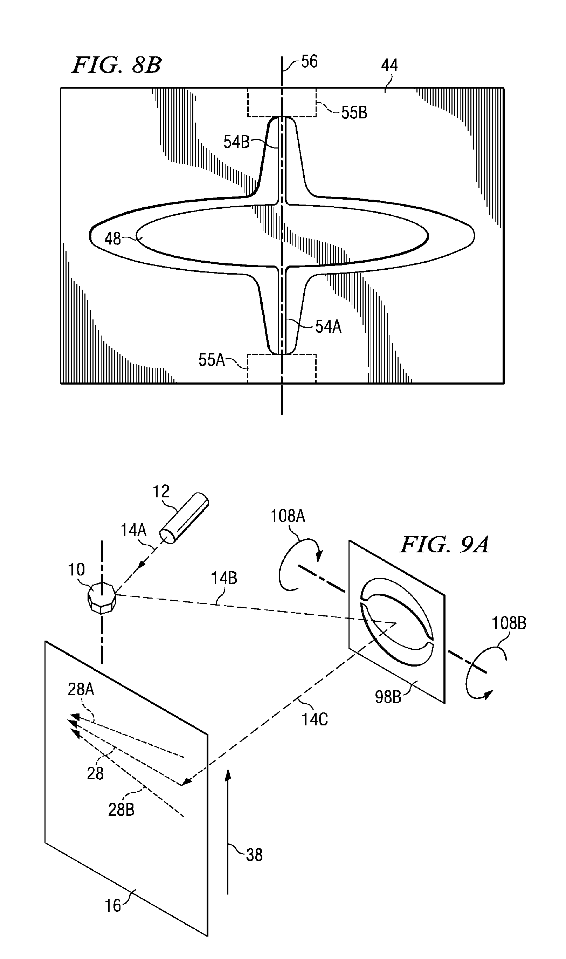

Referring to FIG. 7 there is a perspective illustration of another embodiment of the present invention using two mirrors which pivot about a single axis, such as the single axis mirrors shown in FIGs. 8A and 8B, rather than one dual axis mirror. In addition, two of the dual or two-axis mirrors of FIG. 3A can be used to obtain the same results as achieved by using two single axis mirrors. For example, two of the two-axis mirror arrangement shown in FIG. 3A may be used by not providing (or not activating) the drive mechanism for one of the axes. However, if two mirrors are to be used, it may be advantageous to use two of the more rugged single axis mirrors. That is, each mirror has only a single axis of rotation and a single pair of hinges 54A and 54B such as illustrated in FIGs. 8A and 8B.

Therefore, a single axis analog torsional hinged mirror may be used in combination with a second like single axis torsional mirror to solve the problems of a resonant scanning mirror type laser printer as discussed above with respect to FIG. 2 and alternately, as will be discussed, may be used to provide electronic alignment of a laser printer when the laser printer becomes misaligned due to shock, temperature changes, etc. One suitable arrangement would be to use the long oval mirror of FIG. 8B to provide a resonant beam sweep and the electromagnetic driven round mirror of FIG. 8A to provide the orthogonal movement. Alternately, the round mirror could be used to provide the resonant beam sweep and the elongated oval mirror can be used to provide orthogonal movement.

As shown in FIGs. 8A and 8B, a single axis mirror includes a support member 44 supporting a round mirror or reflective surface 48 as shown in FIG. 8A, or a long oval mirror or reflective surface 48 as shown in FIG. 8B, by the single pair of torsional hinges 54A and 54B. Thus, it will be appreciated that if the mirror portion 48 can be maintained in a resonant state by a drive source, the mirror can be used to cause an oscillating light beam to repeatedly move across a photosensitive medium. It will also be appreciated that an alternate embodiment of a single axis mirror may not require the support member or frame 44 as shown in both FIGs. 8A and 8B. For example, as shown in FIG. 8A, the torsional hinges 54A and 54B may simply extend to a pair of hinge anchors 55A and 55B as shown in dotted lines on FIG. 8A. These type of hinge anchors could also be used with the long oval shaped mirror of FIG. 8B.

As was mentioned above, there may also be a need to move the light beam in a direction orthogonal to the resonant oscillation to correct for misalignment or movement of the photosensitive medium if parallel lines of print are to be achieved. Therefore, referring again to FIG. 7, a second single axis mirror of the type shown in either FIG. 8A or 8B is used to provide the vertical or orthogonal movement of the light beam.The system of the embodiment of FIG. 7 uses the first single axis mirror 34 to provide the right to left, left to right resonant sweep as discussed with respect to FIGs. 2A, 2B, 2C and 2D. However, the up and down or orthogonal control of the beam trajectory is achieved by locating the second single axis mirror 98 to intercept the light beam 14A emitted from light source 12 and then reflecting the intercepted light to the mirror 34 which is providing the resonant sweep motion. Line 100 shown on mirror surface 102 of resonant mirror 34 illustrates how mirror 98 moves the light beam 14A up and down on surface 102 during the left to right and right to left beam sweep so as to provide parallel lines 104 and 106 on the moving medium 16. It will also be appreciated that the position of the mirror providing the resonant sweep and the mirror providing up and down motion to maintain parallel lines could be switched.

FIG. 9A illustrates how a similar arrangement to that discussed with respect to FIG. 7 for electronically realigning the beam sweep generated by a rotating polygon mirror 10 to assure that the printed line of images is maintained parallel to the page in the event the rotating polygon mirror experiences misalignment due to shock, excessive bearing wear, or excessive temperature changes. As shown in FIG. 9A, the printed image line 28 shows the factory calibrated set up with line 28 perpendicular to the movement of the medium 16 so as to obtain a printed line image parallel to the horizontal dimension of the medium. If the rotating polygon mirror 10 experienced a mechanical shock that misaligned the mirror such that it produced a printed image line at an unacceptable angle on a printed page, mirror 98 can be biased between two values to slowly shift or move the reflected light beam 14A on rotating mirror 10 so as to maintain dynamic alignment of the optics. For example, if the resulting image lines tend to slope downward as at 28A, they can be brought back to horizontal by slowly rotating mirror 98 upward as indicated by arcuate arrow 108A during the scan or sweep. Alternatively, if the line image moves or slopes upward across the paper or medium such as at image line 28B, mirror 98 is slowly rotated between two values as indicated by arcurate arrow 108B to move the light beam downward as it sweeps across the medium.

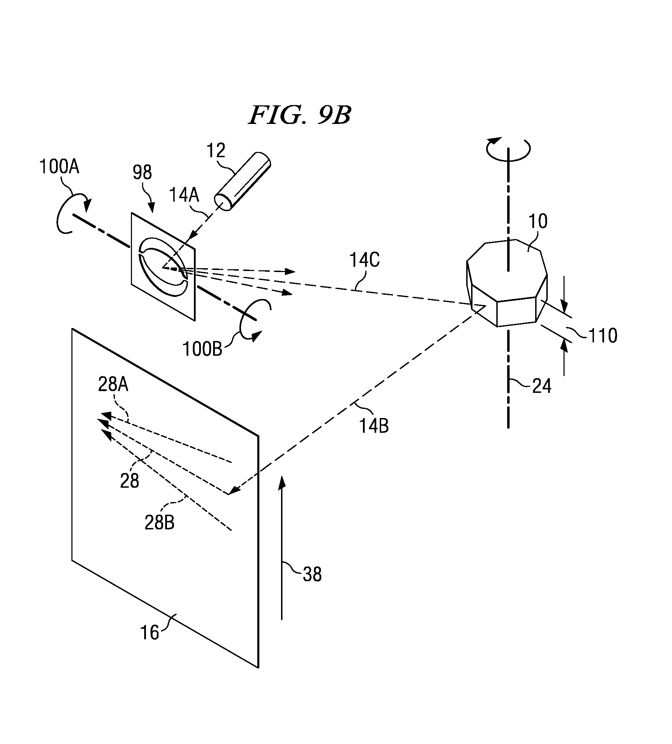

Similarly, FIG. 9B shows another embodiment wherein the rotating polygon mirror 10 and single axis 98 have been switched. It will be appreciated that in this embodiment the thickness of the polygon mirror facets as indicated by arrow 110 may limit the amount of orthogonal movement available for alignment.

The foregoing descriptions of specific embodiments of the present invention have been presented for purposes of illustration and description. They are not intended to be exhaustive or to limit the invention to the precise forms disclosed as many modifications and variations are possible in light of the above teaching. The embodiments were chosen and described in order to best explain the principles of the invention and its practical application to thereby enable others skilled in the art to best utilize the invention and various embodiments with various modifications as are suited to the particular use contemplated. It is intended that the scope of the invention be defined by the claims appended hereto and their equivalents.

## Claims

1. A mirror device for use in an image projection system, comprising:
a reflective surface portion positioned to intercept a beam of light from a light source, said reflective surface pivotally attached to a gimbal portion by a first pair of torsional hinges, and said gimbal portion pivotally attached to a support member by another pair of torsional hinges, such that pivoting of said device about said a pair of torsional hinges results in a light beam reflected from said reflective surface moving along a first plane and pivoting of said device about said another pair of torsional hinges results in said reflective light moving in a direction substantially orthogonal to said first plane;
a first driver for alternately causing pivoting in one direction about said a pair of said torsional hinges and then the opposite direction such that said reflected light beam sweeps or traces across a moving target area having a first dimension and a second dimension orthogonal to said first dimension, said reflected light beam sweeping along said first dimension as said mirror device pivots about said a pair of torsional hinges; and
a second driver for pivoting said mirror device about said another pair of torsional hinges such that a trace across said moving target extends substantially orthogonal to the movement of said target area.

2. The mirror device of claim 1 wherein said first driver generates resonant oscillation of said reflective surface portion around said first pair of torsional hinges.

3. The mirror device of claim 1 or 2 wherein said another pair of torsional hinges are offset from being orthogonal with said first pair of torsional hinges.

4. A printer comprising:
a light source providing a modulated beam of light;
a first device comprising a reflective surface portion positioned to intercept said beam of light from said light source, said first device supported for rotating about a first axis such that rotation of said first device about said first axis results in light reflected from said reflective surface sweeping along a first plane;
a first driver for rotating said first device about said first axis;
a second device for rotating about a second axis such that light from said reflective surface moves in a second direction substantially orthogonal to said first plane;
a moving photosensitive medium having a first dimension and a second dimension orthogonal to said first dimension, and located to receive an image of said reflected light beam as it sweeps or traces across said medium along said first dimension as said first device rotates about said first axis, said photosensitive medium moving in a direction along said second dimension such that an image of a subsequent trace of light is spaced from a previous trace; and
a second driver for rotating said second device about said second axis such that light traces are received on said moving photosensitive medium along a line substantially orthogonal to the movement of said photosensitive medium.

5. The printer of claim 4 wherein said second pair of torsional hinges are offset from being orthogonal with said first pair of torsional hinges.

6. The printer of claim 4 or 5 wherein said first driver generates resonant oscillation of said first device around said first axis.

7. A bi-directional printer comprising:
a light source providing a modulated beam of light;
a first device supported by a first pair of torsional hinges for pivoting about a first axis and further comprising a reflective surface portion positioned to intercept said beam of light from said light source such that pivoting of said device about said pair of torsional hinges results in light reflected from said reflective surface sweeping along a first plane;
a second device for pivoting about another pair of torsional hinges such that light from said reflective surface moves in a second direction substantially orthogonal to said first plane;
a first driver for causing pivoting in one direction about said first pair of torsional hinges and then in the opposite direction;
a moving photosensitive medium having a first dimension and a second dimension orthogonal to said first dimension, and located to receive an image of said reflected light beam as it sweeps across said medium along said first dimension as said first device pivots about said first pair of torsional hinges, said photosensitive medium moving in a direction along said second dimension such that an image of a subsequent trace of light is spaced from a previous trace; and
a second driver for pivoting said second device about said second pair of torsional hinges such that images of said sweep on said moving photosensitive medium are received along a line substantially orthogonal to the movement of said photosensitive medium.

8. The printer of claim 7 wherein said first device is a resonant mirror device.

9. A printer comprising:
a light source providing a modulated beam of light;
a mirror device comprising a reflective surface portion positioned to intercept said beam of light from said light source, said reflective surface supported by a first hinge arrangement for pivoting about a first axis and supported by a second hinge arrangement for pivoting about a second axis substantially orthogonal to said first axis such that pivoting of said device about said first axis results in light reflected from said reflective surface defining a first plane, and pivoting of said device about said second axis results in said reflective light moving in a second direction substantially orthogonal to said first plane;
a first driver for causing pivoting of said reflective surface in one direction about said first axis and then the opposite direction;
a moving photosensitive medium having a first dimension and a second dimension orthogonal to said first dimension, and located to receive an image of said reflected light beam as it sweeps or traces across said medium along said first dimension as said mirror device pivots about said first axis, said photosensitive medium moving in a direction along said second dimension such that an image of a subsequent trace of light is spaced from a previous trace; and
a second driver for pivoting about said second axis such that traces are received on said moving photosensitive medium along a line substantially orthogonal to the movement of said photosensitive medium.

10. The printer of claim 9 wherein said first driver generates resonant oscillations of said resonant scanning mirror about said first axis.
